# EUROPEAN PATENT SPECIFICATION

(11) **EP 2 289 306 B1**
(45) Date of publication and mention of the grant of the patent: **03.04.2013**
(21) Application number: 10180662.8
(22) Date of filing: 05.04.2006
(51) Int. Cl.: A01F 25/20

(54) **Device for removing and processing silage for cattle**
Silageentnahme- und Verarbeitungsvorrichtung
Dispositif de désilage et traitement du silage

(30) Priority: 11.04.2005 NL 1028732
(43) Date of publication of application: 02.03.2011
(62) Divisional of application: 06112235.4
(73) Proprietor: Trioliet Mullos B.V., 7575 BE Oldenzaal (NL)
(72) Inventor: Liet, Cornelis, Hendricus, 7581 PJ Losser (NL); Van der Plas, Nicolaas, 7576 WX Oldenzaal (NL)
(74) Representative: De Vries & Metman

(56) References cited:
- DE-A1- 3 318 338
- DE-A1- 3 602 403
- DE-A1- 3 805 300
- DE-A1- 4 210 479
- DE-U1- 9 303 751
- DE-U1- 20 104 779
- DE-U1- 29 705 587
- DE-U1-202004 007 874
- FR-A1- 2 633 148
- NL-C2- 1 001 864

## Description

The invention relates to a device for removing and processing silage for cattle, comprising a chassis with one or more axles, a removing unit for removing silage from a stock thereof, which removing unit comprises a pivot arm which is pivotally supported about a pivot axis at one end and which carries a removing member at its free end, a receptacle for removed silage, a container for removed silage and conveyor means for conveying silage from said receptacle to said container, as well as to a removing unit for removing silage from a stock thereof.

Such a device and removing unit are known from DE-U-201 04 779. The removing member of the known device is embodied as a cutter element, which loosens the silage from the stock into very small parts. The drawback of this is that the quality of the silage rapidly deteriorates and a relatively great deal of silage is lost upon removal thereof.

From NL-A-9500544 a device for detaching and processing silage is known in which the removing member is embodied as a cutting board. The cutting board is pivotally connected to the end of a pivot arm. The device described in said document is embodied as a device which is pulled forward, for example by a tractor. Said known construction is not suitable for use with a device in which a precisely metered amount of silage is to be supplied to the container, because large chunks of silage are cut from the stock and deposited into the container in their entirety.

Document DE-U-9303751 discloses a device according to the preamble of claim 1.

The object of the invention is to provide an improved device of the kind referred to in the introduction.

In order to accomplish that object, the device is characterised by the features of claim 1.

In this way a device for removing and processing silage for cattle its obtained by means of which silage can be removed from a stock thereof and the removed silage can be discharged practically directly from the cutting board into the receptacle and subsequently into the container. According to the invention, the discharge means enable an even discharge of the detached silage into the receptacle while the silage is being cut out, so that the detached silage can be transported to the container in an even manner by the conveyor means. This makes it possible to realise a precise metering of the amount of silage. The removing process can be stopped the moment the desired amount is reached, so that no silage is wasted. Furthermore it is achieved in this manner that the conveyor means are evenly loaded.

The discharge means can be configured in various ways. According to an advantageous variant of the invention, the discharge means comprise at least one roller, which is rotatably mounted in the cutting board some distance above the cutting blade(s). Said rotatable roller may be driven by drive means.

According to an advantageous embodiment, the roller is circumferentially provided with discharge elements, preferably with one or more helically extending strips, which generate a force towards a central region of the roller upon rotation of the roller.

According to an advantageous embodiment of the device according to the invention, the cutting board is movably connected to the free end of the pivot arm, and a mechanism is provided for adjusting the angle of the cutting board relative to the pivot arm, such that the spacing between the cutting blade and the pivot axis is smaller in a central position of the pivot arm than in a lower and an upper position of the pivot arm. This makes it possible to remove silage from a stock having a great height, with the cutting blade moving in a relatively steep cutting path over the entire height of the stock.

Preferably, the cutting board is movably connected to the free end of the pivot arm by means of a parallelogram linkage.

According to an advantageous embodiment of the invention, the position of the cutting board relative to the pivot arm can be adjusted by means of an adjusting element mounted between the cutting board and the pivot arm. This makes it possible to adjust the cutting depth of the cutting board in a fixed position of the device relative to the stock of silage while maintaining the desired steep cutting path of the cutting blade.

The invention will now be explained in more detail with reference to the drawing, in which a few embodiments of the device according to the invention are shown schematically.
Fig. 1 is a schematic side view of a device which does not belong to the invention.
Fig. 2 is a schematic top plan view of the device of Fig. 1, in which the cutting board is only shown schematically.
Fig. 3 is a schematic front view of the device of Fig. 1.
Fig. 4 is a larger-scale detail of the device of Fig. 1.
Fig. 5 is a front view corresponding to Fig. 3 of an alternative embodiments of the device of Fig. 1, also not covered by the present invention.
Fig. 6 is a larger-scale view of a part of the device of Fig. 1.
Fig. 7 is a larger scale view of the detail of Fig. 4, which furthermore shows part of the cutting board.
Fig. 8 is a side view of an embodiment of the device according to the invention.
Fig. 9 is a larger-scale view of a part of the device of Fig. 8.
Figs. 10-13 show various embodiments of a cutting board for use in the device according to the invention.
Fig. 14 is a side view of a roller that can be used as a discharge means with the cutting board of the device of Fig. 1 or Fig. 8.
Fig. 15 is a side view of a roller that can be used as a discharge means with the cutting board of the device of Fig. 1 or Fig. 8.
Fig. 16 is a side view of an alternative embodiment of the device according to the invention.
Fig. 17 shows a part of the device of Fig. 16.

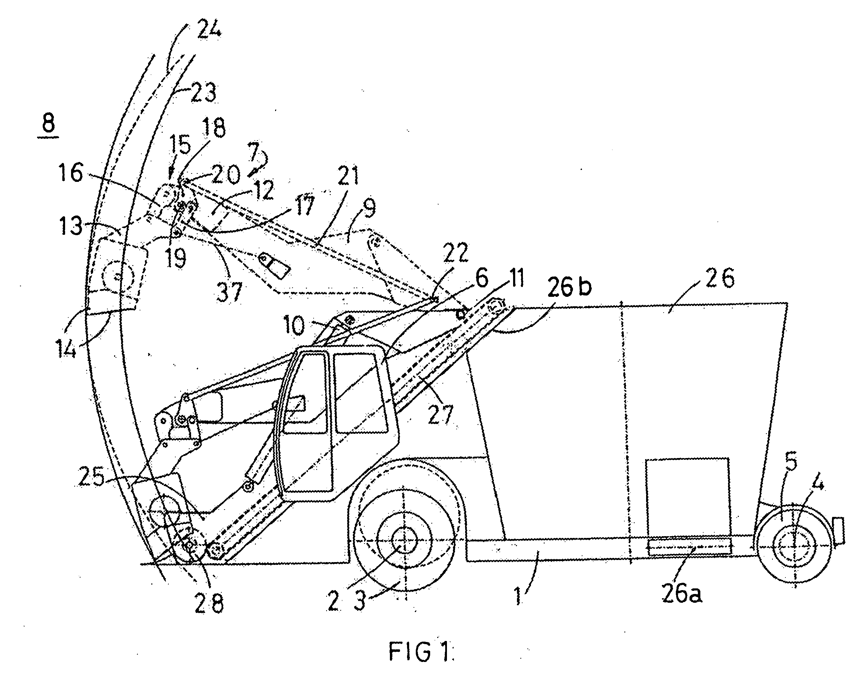

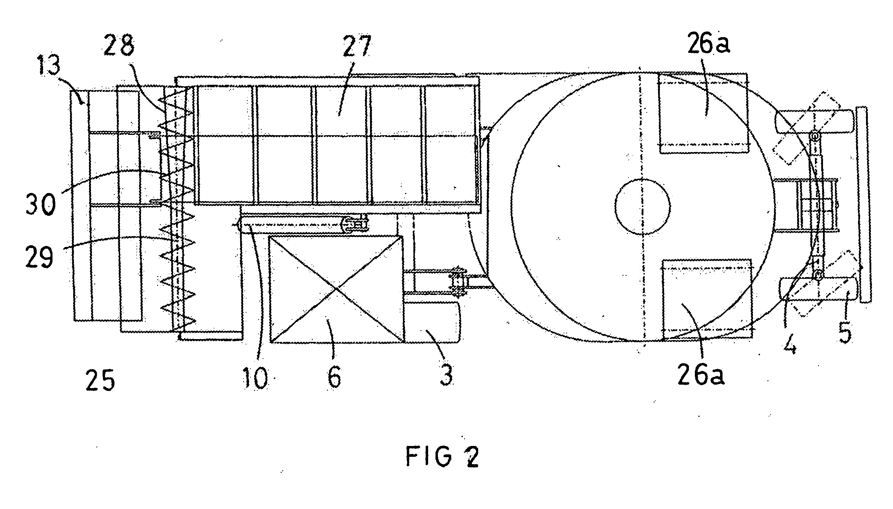

Figs. 1-3 show an embodiment of a device for removing and processing silage for cattle wich is not covered by the present invention. Said device comprises a chassis 1 provided with a driven front axle 2 with front wheels 3 and a rear axle 4 with rear wheels 5. The driving motor for the front axle is not shown in the drawing. The rear wheels 5 can be steered in a manner that is not shown, as is indicated schematically by means of a broken line in Fig. 2. The device furthermore comprises a cabin 6 for a driver, who can control all the functions of the device from the cabin. An alternative to the so-called self-driving device that is shown in the drawing would be a tractor-drawn device without driving motor.

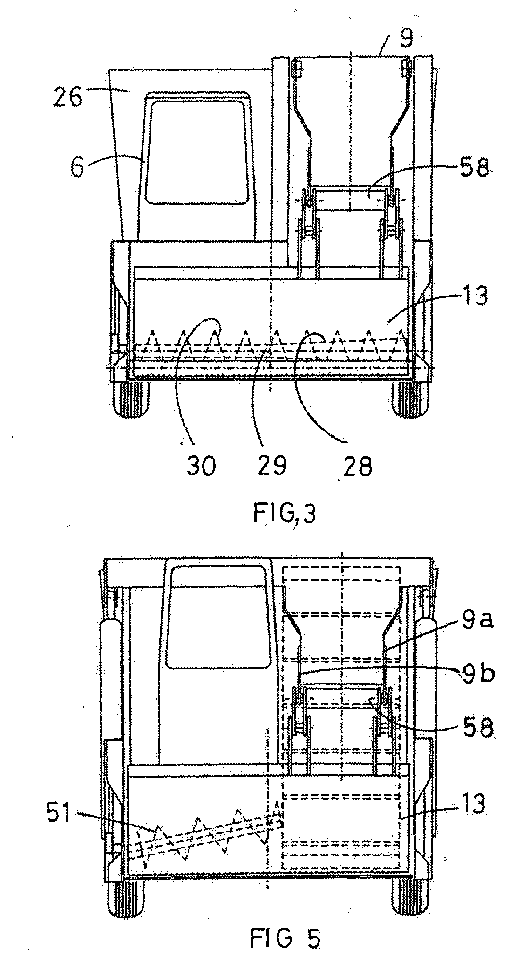

The device comprises a removing unit 7 for removing silage from a stock 8 (schematically indicated) thereof. The removing unit 7 is provided with a pivot arm 9, which can be pivoted upwards and downwards by means of a cylinder-piston assembly 10. The pivot arm 9 is pivotally supported about a pivot axis 11 at one end and carries a removing member embodied as a cutting board 13 at its free end 12. Said cutting board 13 is configured as a U-shaped cutting board in the embodiment that is described herein, each side of which U-shaped cutting board 13 carries two cutting blades 14, at least one cutting blade of which is driven to carry out a reciprocating cutting operation. The cutting blades 14 are shown in more detail in Fig. 5.

It is noted that instead of a U-shaped cutting board also an L-shaped cutting board or other type of cutting board may be used as the removing member. Furthermore, other types of cutting blades may be used.

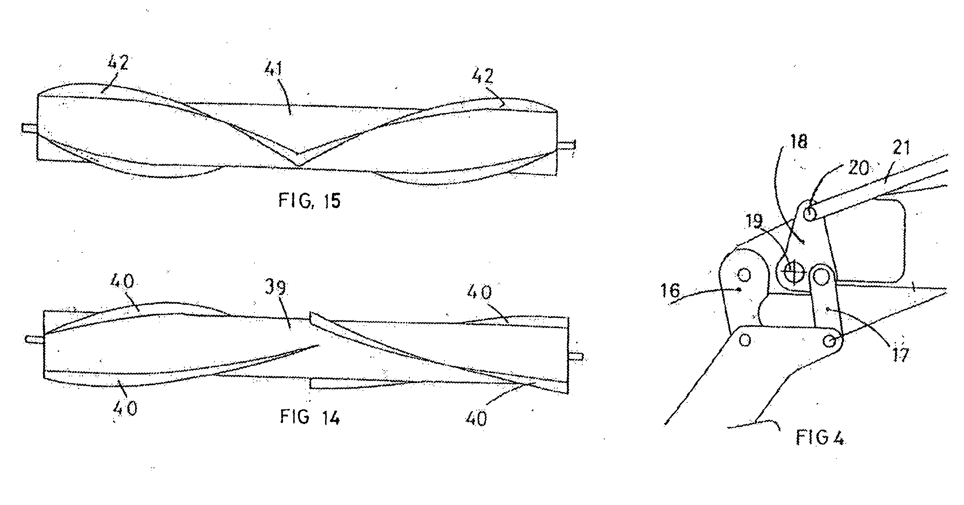

The cutting board 13 is movably connected to the free end 12 of the pivot arm 9 by means of a parallelogram linkage 15. The linkage 15, which is shown on a larger scale in Fig. 4, comprises two at least substantially parallel rods 16, 17, from which the cutting board 13 is suspended by means of pivot joints. The rod 16 is pivot -mounted to the free end 12 of the pivot arm 9. The rod 17 is pivotally connected to a steering plate 18, which is in turn pivot-mounted to the free end 12 of the pivot arm 9 at 19. The steering plate 18 is pivotally connected to a steering rod 21 at the position indicated at 20, which steering rod is pivotally connected at the opposite end to a fixed point 22 of the device, which point is located near the pivot axis 11 of the pivot arm 9.

The steering rod 21 and the steering plate 18 steer the parallelogram linkage 15 upon movement of the pivot arm 9 from an upper position to the lower position that is shown in Fig. 1, as a result of which the angle between the cutting board 13 and the pivot arm 9 changes such that the distance from the cutting blades 14 of the long side of the U-shaped cutting board 13 to the pivot axis 11 is smaller in a central position of the pivot arm 9 than in the upper and lower positions of the pivot arm. This means that the cutting path 23 that said cutting blades 14 describe at the upper side and the bottom side of the stock of silage 8 is steeper than a circular path indicated by a dashed line 24, with the pivot axis 11 as the centre thereof. As a result, the silage that is detached from the stock of silage 8 by the cutting board 13 can fall into a receptacle 25 of the device described herein more easily, and the detached silage is prevented from accumulating against the lower part of the wall of the stock of silage 8. In this way an even supply of silage detached by the cutting board 13 can be realised.

An even supply of detached silage to the receptacle 25 is important in order to realise an even supply of the silage from the receptacle 25 to an open container 26. The container 26 is supported on the chassis 1. In the device described herein, mixing elements (not shown) are present in the container 26 for mixing the silage with other feed components. A conical mixing worm may be used as the mixing element, for example. Furthermore, discharge means 26a (schematically indicated) are provided for discharging the mixed silage.

A conveyor 27 (schematically indicated) is provided for supplying the silage from the receptacle 25 to the container 26. Because of the even manner in which the silage is supplied to the container 26, it is possible to realise an exact desired weight of silage in the container. Weighing means (not shown) are provided for measuring the amount of silage that is supplied to the container 26, which weighing means comprise, for example, a display screen present in the cabin 6, on which the weight supplied to the container 26 is displayed. When roughly the desired weight has been reached, the removing process can be stopped by the driver.

Fig. 1 shows that the conveyor 27 extends partially above the container 26. A screening plate 26b is provided, which functions to prevent the silage that is present in the container 26 from being pressed against the bottom side of the conveyor by the mixing worm.

As Figs. 2 and 3 show, the receptacle 25 extends over the entire width of the chassis 1 and the cutting board 13, whilst the width of the conveyor 27 amounts to approximately half the width of the receptacle 25. The cabin 6 is disposed beside the conveyor 27. A cross conveyor 28 embodied as a worm conveyor is disposed in the receptacle 25 for supplying the silage collected in the receptacle 25 to the conveyor 27. The worm conveyor 28 has a central shaft 29 whose part located at the conveyor 27 expands conically towards the outer side, so that the height of the helical worm blade 30 decreases to practically zero from the centre to the outer end. This results in an even distribution of the silage across the width of the conveyor 27.

Fig. 5 schematically shows an alternative embodiment of the device, which is not covered by the present invention either, in which a worm conveyor 51 is mounted beside the conveyor 27 in the receptacle 25. Said conveyor worm 51 transports the removed silage from this part of the receptacle 25 to the conveyor 27.

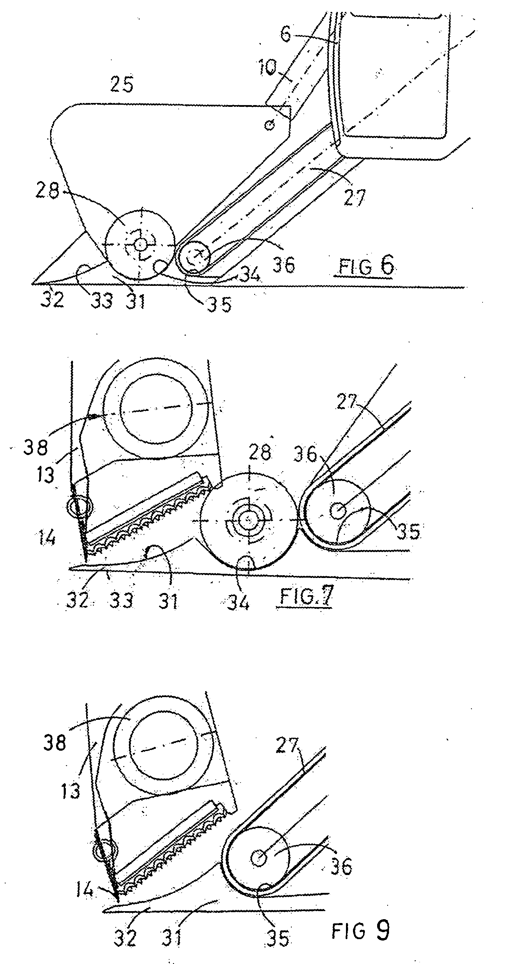

Figs. 6 and 7 are larger-scale sectional views of the receptacle 25. The receptacle 25 comprises a bottom plate or insertion plate 31 having an insertion side 32, which is moved over the floor on which the stock of silage 8 is present, as close to said floor as possible, against the wall of the stock of silage 8 and partially under said silage, for cutting out an amount of silage. In Fig. 1 a broken line indicates that the front axle 2 is movably supported in the chassis 1, so that the insertion plate 31 can be moved down onto the floor and under the silage of the stock 8 thereof.

As is shown in particular in Fig. 7, the insertion side 32 comprises an arcuate portion 33, which will be discussed yet hereinafter. Furthermore, the bottom plate 31 comprises an arcuate portion 34, which houses the cross conveyor 28. Contiguous to said second arcuate portion 34 is a third arcuate portion. 35, which houses a return pulley 36 of the conveyor 27.

As is shown schematically in Fig. 1, an adjusting element 37, for example embodied as a cylinder-piston assembly, is provided between the cutting board 13 and the pivot arm 9. Said adjusting element can be used for adjusting the position of the cutting board 13 relative to the pivot arm for setting the thickness of the layer of silage that is to be removed from the stock of silage by the cutting board 13. In addition, said adjusting element 37 is used for retracting the cutting board 13 in the lower position of the cutting board 13, during which retracting movement the front cutting blade 14 moves in an arcuate path that corresponds at least substantially to the shape of the arcuate portion 33. As a result, practically all the removed silage is supplied to the cross conveyor 28 and subsequently to the conveyor 27.

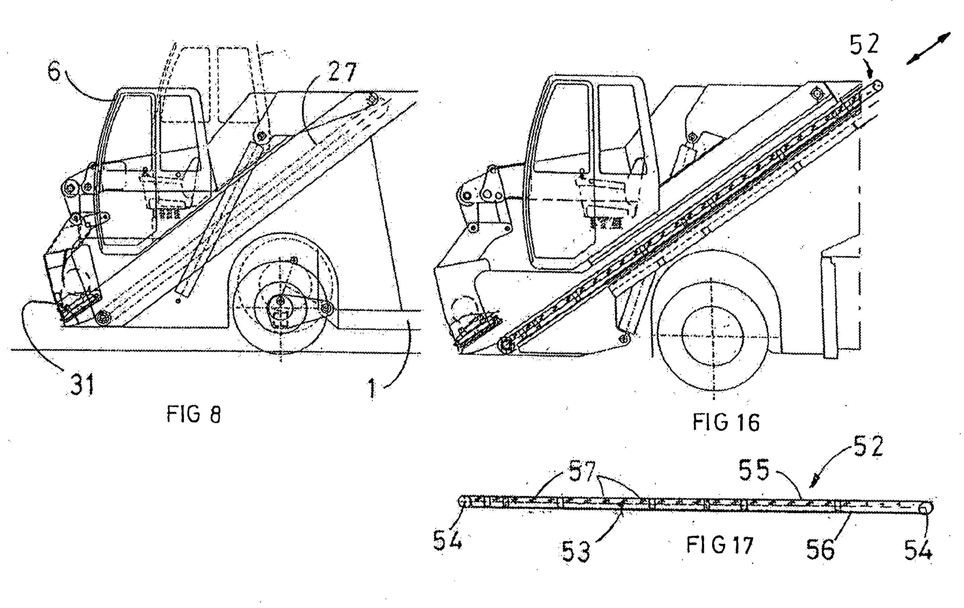

Fig. 8 shows an embodiment of the invention, in which the conveyor 27 extends the entire width of the chassis 1. The cabin 6 is floatingly supported above the conveyor 27 in this embodiment. The cabin 6 is adjustable for height, as is indicated by a broken line. While the device is being driven, the cabin 6 is in the lower position, so that the overall height of the device remains within bounds. While silage is being removed, the cabin 6 takes up a high position, so that on the one hand sufficient free space is present between the cabin and the conveyor whilst on the other hand the operator will have a better view of the work. In this embodiment the bottom plate 31 of the receptacle 25 is configured without the arcuate portion 34, as is shown in Fig. 9.

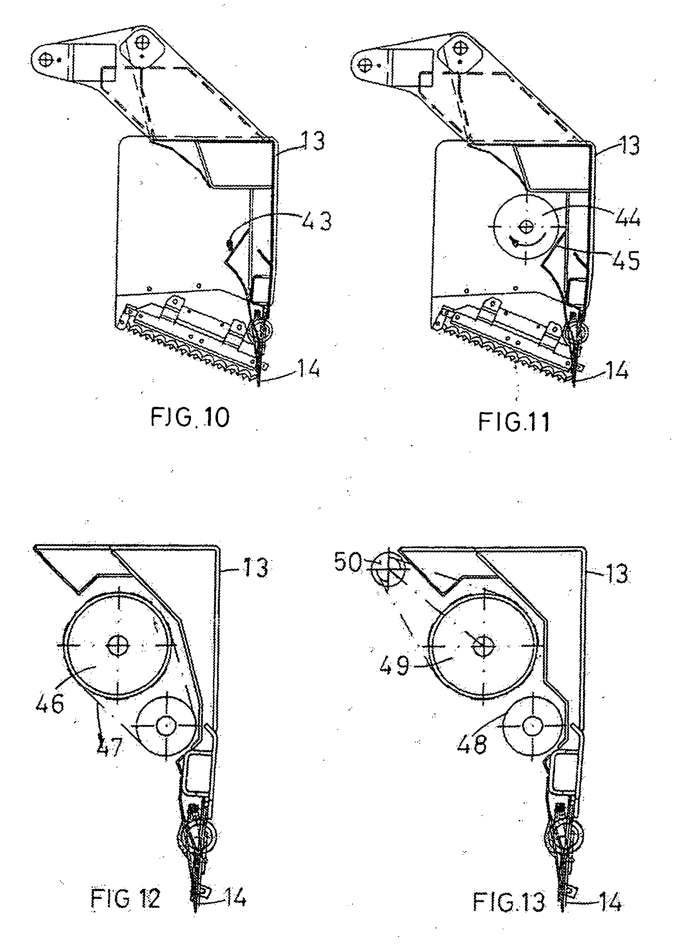

The cutting board 13 of the device that is shown in Fig. 1 its provided with discharge means 38 (schematically indicated in Fig. 1) on the inner side, which discharge the detached silage 8 from the cutting board 13. In the embodiment that is shown in Fig. 1, the discharge means are embodied as a rotated roller 39, which is shown in elevation in Fig. 14. Other embodiments of the discharge means 38 are also possible, and examples thereof are shown schematically in Figs. 10-13, which will be discussed yet hereinafter.

When the cutting board 13 cuts a layer of silage from the stock 8 in use, the discharge roller 39 forces the cutting gap open, as it were, so that significantly less force is required for moving the pivot arm 9 with the cutting board 13 down. In addition, the discharge roller 39 directly takes the detached silage from the cutting board 13, so that the silage falls down into the receptacle 25. The advantage of this is that no large amount of silage will collect in the cutting board 13, which would lead to high peak loads when the silage falls down into the receptacle and on to the conveyor. The discharge roller 39 provides an even discharge of the silage in small amounts thereof, thus preventing the receptacle 25 and the conveyor 27 from being subjected to peak loads. Furthermore, an even supply of the silage to the container 26 is ensured, so that the desired weight can be exactly determined.

As Fig. 14 shows, helically extending blades 40 are attached to the discharge roller 39, which blades exert a centrally oriented force on the silage upon rotation of the discharge roller 39, thereby transporting the silage towards the centre of the receptacle 25. The direction of rotation of the discharge roller 39, which is indicated by an arrow in Fig. 11, is such that the lower half of the discharge roller moves away from the cutting board 13.

Fig. 15 shows an alternative discharge roller 41, which is likewise configured with helical blades 42. This roller 41 may be used instead of the discharge roller 39 in the device of Fig. 1.

Figs. 10-13 show various embodiments of the discharge means 38. With the cutting board 13 that is shown in Fig. 6, a guide plate 43 is provided as the discharge means 38. Said guide plate 43 deflects the detached silage sideways, so that the detached silage will fall down sooner. This variant is suitable for relatively loose silage material and for cutting out relatively thin layers of silage.

Fig. 11 shows a cutting board 13 in which a rotatably supported roller 44 and a guide plate 45 are used. The rotatable roller 44 is not driven in this case. The direction of rotation is indicated by means of an arrow, and the same direction of rotation applies when the roller 44 is driven.

The direction of rotation is such that the lower half of the roller moves away from the cutting board and the detached silage is moved away from the stock thereof. On the one hand the cutting gap is forced open in this way whilst on the other hand the detached silage is directly discharged from the cutting board and supplied to the receptacle 25 in an even manner.

Fig. 12 shows a cutting board 13 in which the discharge means are made up of a combination of two coupled rotatable rollers 46,47. Said rollers 46, 47 may or may not be driven.

Fig. 13 finally shows a cutting board 13 in which the discharge means are made up of three rollers 48-50. The roller 48 may be configured with scraping means, for example, and be freely rotatably supported in the cutting board 13, so that said roller is driven by the silage. The rollers 49 and 50 are coupled and may or may not be driven.

It is noted that the removing unit 7 is suitable not only for the device as described herein but also for use with other types of devices for removing silage. Furthermore, the cutting board 13 fitted with discharge means 38 as described herein is also suitable for use with other types of devices and silage removing units.

Fig. 16 shows part of an embodiment of the device according to the invention, in which a special version of the conveyor 27 is used. In this case the conveyor 27 is embodied as a self-supporting conveying unit or cassette 52 as shown in Fig. 17, which comprises a frame 53 with pulleys 54 for an endless conveyor belt 55. The frame 53 may be configured with a bottom plate 56 with idlers 57. The endless conveyor belt 55 is laid over the frame 53 with the pulleys 54 from one side and subsequently the conveyor unit as a whole can be moved into the chassis of the device from the upper side, as is indicated by means of a double arrow in Fig. 16. Because of this arrangement, exchanging the endless conveyor belt 55 is relatively easy.

From the drawing it is apparent that in the device according to the invention the width of the cabin 6 amounts to approximately half the width of the chassis 1. In Figs. 2, 3 and 5 the pivot arm 9, which comprises two sub-arms 9a and 9b in the embodiment as described herein, is located beside the cabin 6. The cutting board 13 is suspended from each of said sub-arms 9a,9b by means of a linkage 15 as described herein. The cutting board 13 has a width approximately the same as the width of the chassis 1. The cutting board 13 is subjected to large forces during cutting, which forces might result in deformation of the pivot arm 9 and cause the cutting board 13 to be pulled out of true. In the embodiments described herein, the cutting board 13 is prevented from being pulled out the true in that a torsion tube 58 is mounted between the free ends of the pivot arm portions 9a,9b at the location of the rods 16.

The invention is not restricted to the embodiments as described in the foregoing, which can be varied in several ways without departing from the scope of the invention as limited by the claims.

## Claims

1. A device for removing and processing silage for cattle, comprising a chassis (1) with one or more axles (24), a removing unit for removing silage from a stock thereof, which removing unit (7) comprises a pivot arm (19) which is pivotally supported about a pivot axis (11) at one end and which carries a removing member (13) at its free end (12), a receptacle (25) for removed silage, a container (26) for removed silage and conveyor means (27) for conveying silage from said receptacle to said container, wherein the removing member is embodied as a cutting board (13) with at least one cutting blade (14), which cutting board is provided on the inner side thereof with discharge means (38, 39, 41, 44, 46, 47, 48, 49) for discharging detached silage from the cutting board wherein the working width of the conveyor means (27) substantially corresponds to the working width of the cutting board (13), **characterized in that** the device comprises a cabin (6) for an operator, the cabin being positioned above the conveyor means.

2. A device according to claim 1 wherein the cabin (6) is movable in height direction.

3. A device according to any one of the preceding claims, wherein said discharge means (38, 39, 41, 44, 46, 47, 48, 49) comprise at least one roller, which is rotatably mounted in the cutting board some distance above the cutting blade(s) (14).

4. A device according to claim 3, wherein the rotatable roller can be driven by drive means, preferably in a direction of rotation in which the lower half of the roller moves away from the cutting board (13).

5. A device according to claim 3 or 4, wherein the roller (39, 41) is circumferentially provided with discharge elements (40, 42), preferably with one or more helically extending strips, which generate a force towards a central region of the roller upon rotation of the roller.

6. A device according to any one of the preceding claims, wherein at least one axle (2, 4) can be driven by a driving motor supported on the chassis.

7. A device according to any one of the preceding claims, wherein the cutting board (13) is movably connected to the free end of the pivot arm (9) and a mechanism is provided for adjusting the angle of the cutting board (13) relative to the pivot arm, such that the spacing between the cutting blade and the pivot axis is smaller in a central position of the pivot arm than in a lower and an upper position of the pivot arm (9).

8. A device according to claim 7, wherein the cutting board (13) is movably connected to the free end of the pivot arm (9) by means of a parallelogram linkage.

9. A device according to claim 8, wherein a rod of the parallelogram linkage (15) is adjustable with respect to the pivot arm.

10. A device according to claim 9, wherein said rod (17) is pivotally connected to a steering plate (18) that is pivotally connected to the free end of the pivot arm, with a steering rod being mounted between the steering plate and a stationary point (22) of the device near the pivot axis of the pivot arm.

11. A device according to any one of the preceding claims, wherein the position of the cutting board (13) relative to the pivot arm (9) can be adjusted by means of an adjusting element (37) arranged between the cutting board and the pivot arm.

12. A device according to claim 11, wherein the bottom of the receptacle (25) comprises an insertion plate (31) having a projecting, sharply tapered insertion side (32), which insertion plate comprises at least two arcuate portions (33, 34), a first arcuate portion (33) joining said insertion side and a second arcuate portion (34) joining a pulley of the conveyor means.

13. A device according to claim 12, wherein the course of said first arcuate portion (33) corresponds to the path of movement of the cutting board (13) upon movement of the cutting board by the adjusting element (37).

14. A device according to any one of the preceding claims, wherein the conveyor means (27) are embodied as a self-supporting conveyor unit (52) which is detachably mounted in the chassis, said conveyor unit being provided with an endless conveyor belt (55), for example, which is mounted on a frame provided with pulleys (54).

## Patentansprüche

1. Vorrichtung zum Entnehmen und Verarbeiten von Silage für Vieh, die aufweist: ein Fahrgestell (1) mit einer oder mehreren Achsen (24), eine Entnahmeeinheit zum Entnehmen von Silage aus ihrem Lager, wobei die Entnahmeeinheit (7) einen Schwenkarm (9) aufweist, der an einem Ende schwenkbar um eine Schwenkachse (11) gehalten wird, und der an seinem freien Ende (12) ein Entnahmeelement (13) trägt, ein Gefäß (25) für entnommene Silage, einen Behälter (26) für entnommene Silage und Fördereinrichtungen (27) zum Fördern von Silage aus dem Gefäß zu dem Behälter, wobei das Entnahmeelement als ein Schneidbrett (13) mit wenigstens einer Schneidklinge (14) ausgeführt ist, wobei das Schneidbrett auf seiner Innenseite mit Abgabeeinrichtungen (38, 39, 41, 44, 46, 47, 48, 49) zum Abgeben von von dem Schneidbrett abgelöster Silage versehen ist, wobei die Arbeitsbreite der Fördereinrichtung (27) im Wesentlichen der Arbeitsbreite des Schneidbretts (13) entspricht, **dadurch gekennzeichnet, dass** die Vorrichtung eine Kabine (6) für einen Bediener aufweist, wobei die Kabine über der Fördereinrichtung positioniert ist.

2. Vorrichtung nach Anspruch 1, wobei die Kabine (6) in der Höhenrichtung beweglich ist.

3. Vorrichtung nach einem der vorhergehenden Ansprüche, wobei die Abgabeeinrichtungen (38, 39, 41, 44, 46, 47, 48, 49) wenigstens eine Walze aufweisen, die drehbar in dem Schneidbrett über der/den Schneidklinge/n montiert (14) ist.

4. Vorrichtung nach Anspruch 3, wobei die drehbare Walze von einer Antriebseinrichtung vorzugsweise in eine Richtung, in der die untere Hälfte der Walze sich von dem Schneidbrett (13) weg bewegt, angetrieben werden kann.

5. Vorrichtung nach Anspruch 3 oder 4, wobei die Walze (39, 41) am Umfang mit Abgabeelementen (40, 42) vorzugsweise mit einem oder mehreren sich schraubenförmig erstreckenden Bändern versehen ist, die bei der Drehung der Walze eine Kraft in Richtung eines mittleren Bereichs der Walze erzeugen.

6. Vorrichtung nach einem der vorhergehenden Ansprüche, wobei wenigstens eine Achse (2, 4) von einem Antriebsmotor angetrieben werden kann, der auf dem Fahrgestell gehalten wird.

7. Vorrichtung nach einem der vorhergehenden Ansprüche, wobei das Schneidbrett (13) beweglich mit dem freien Ende des Schwenkarms (9) verbunden ist und ein Mechanismus zum Einstellen des Winkels des Schneidbrettes (13) relativ zu dem Schwenkarm vorgesehen ist, so dass der Abstand zwischen der Schneidklinge und der Schwenkachse in einer mittleren Position des Schwenkarms kleiner als in einer unteren und einer oberen Position des Schwenkarms (9) ist.

8. Vorrichtung nach Anspruch 7, wobei das Schneidbrett (13) mittels eines Parallellogrammgestänges beweglich mit dem freien Ende des Schwenkarms (9) verbunden ist.

9. Vorrichtung nach Anspruch 8, wobei eine Stange des Parallelogrammgestänges (15) in Bezug auf den Schwenkarm einstellbar ist.

10. Vorrichtung nach Anspruch 9, wobei die Stange (17) schwenkbar mit einer Führungsplatte (18) verbunden ist, die schwenkbar mit dem freien Ende des Schwenkarms verbunden ist, wobei eine Lenkstange zwischen der Führungsplatte und einem ortsfesten Punkt (22) der Vorrichtung nahe der Schwenkachse des Schwenkarms montiert ist.

11. Vorrichtung nach einem der vorhergehenden Ansprüche, wobei die Position des Schneidbretts (13) relativ zu dem Schwenkarm (9) mittels eines Einstellelements (37) einstellbar ist, das zwischen dem Schneidbrett und dem Schwenkarm angeordnet ist.

12. Vorrichtung nach Anspruch 11, wobei die Unterseite des Gefäßes (25) eine Einsteckplatte (31) mit einer vorstehenden steil angeschrägte Einsetzseite (32) aufweist, wobei die Einsetzplatte wenigstens zwei bogenförmige Abschnitte (33, 34) aufweist, wobei ein erster bogenförmiger Abschnitt (33) sich an die Einsetzseite anfügt und ein zweiter bogenförmiger Abschnitt (34) sich an eine Riemenscheibe der Fördereinrichtung anfügt.

13. Vorrichtung nach Anspruch 12, wobei der Verlauf des ersten bogenförmigen Abschnitts (33) dem Weg der Bewegung des Schneidbretts (13) nach der Bewegung des Schneidbretts durch das Einstellelement (37) entspricht.

14. Vorrichtung nach einem der vorhergehenden Ansprüche, wobei die Fördereinrichtung (27) als eine selbsttragende Fördereinheit (52) ausgeführt sind, die lösbar in dem Fahrgestell montiert ist, wobei die Fördereinheit zum Beispiel mit einem Endlosband (55) versehen ist, das auf einen mit den Riemenscheiben (54) versehenen Rahmen montiert ist.

## Revendications

1. Dispositif de prélèvement et de traitement de fourrage ensilé pour bétail, comprenant un châssis (1) muni d'un ou de plusieurs essieu(x) (24), une unité de prélèvement pour prélever du fourrage ensilé à partir d'un stock de ce dernier, laquelle unité de prélèvement (7) comporte un bras pivotant (9) qui est supporté à pivotement autour d'un axe de pivotement (11), par l'une des extrémités, et qui porte un organe de prélèvement (13) à son extrémité libre (12), un réceptacle (25) dédié à du fourrage ensilé prélevé, un conteneur (26) dévolu à du fourrage ensilé prélevé, et un moyen convoyeur (27) affecté au convoyage de fourrage ensilé depuis ledit réceptacle jusqu'audit conteneur, dans lequel l'organe de prélèvement revêt la forme d'un panneau de sectionnement (13) équipé d'au moins une lame de coupe (14), lequel panneau de sectionnement est doté, sur sa face intérieure, de moyens d'évacuation (38, 39, 41, 44, 46, 47, 48, 49) conçus pour évacuer du fourrage ensilé dissocié, à partir du panneau de sectionnement, dans lequel la largeur de travail du moyen convoyeur (27) correspond, pour l'essentiel, à la largeur de travail du panneau de sectionnement (13),
**caractérisé par le fait que** ledit dispositif comprend une cabine (6) destinée à un opérateur, ladite cabine étant placée au-dessus du moyen convoyeur.

2. Dispositif selon la revendication 1, dans lequel la cabine (6) est mobile dans le sens de la hauteur.

3. Dispositif selon l'une quelconque des revendications précédentes, dans lequel lesdits moyens d'évacuation (38, 39, 41, 44, 46, 47, 48, 49) comprennent au moins un rouleau monté à rotation, dans le panneau de sectionnement, à une certaine distance au-dessus de la ou des lame(s) de coupe (14).

4. Dispositif selon la revendication 3, dans lequel le rouleau rotatif peut être entraîné par un moyen d'entraînement, de préférence dans une direction de rotation dans laquelle la moitié inférieure dudit rouleau effectue un mouvement l'éloignant du panneau de sectionnement (13).

5. Dispositif selon la revendication 3 ou 4, dans lequel le rouleau (39, 41) est pourvu, dans le sens circonférentiel, d'éléments de décharge (40, 42), de préférence d'une ou plusieurs membrure(s) s'étendant hélicoïdalement, qui génèrent une force en direction d'une région centrale du rouleau lors d'une rotation dudit rouleau.

6. Dispositif selon l'une quelconque des revendications précédentes, dans lequel au moins l'un des essieux (2, 4) peut être entraîné par un moteur d'entraînement en appui sur le châssis.

7. Dispositif selon l'une quelconque des revendications précédentes, dans lequel le panneau de sectionnement (13) est relié à l'extrémité libre du bras pivotant (9), avec faculté de mouvement, et un mécanisme est prévu pour régler l'angle décrit par ledit panneau de sectionnement (13) par rapport audit bras pivotant, de façon telle que l'espacement entre la lame de coupe et l'axe de pivotement soit moindre, dans une position centrale du bras pivotant, que dans des positions inférieure et supérieure dudit bras pivotant (9).

8. Dispositif selon la revendication 7, dans lequel le panneau de sectionnement (13) est relié à l'extrémité libre du bras pivotant (9), avec faculté de mouvement, au moyen d'une tringlerie de type parallélogramme.

9. Dispositif selon la revendication 8, dans lequel une tige de la tringlerie (15) de type parallélogramme est réglable par rapport au bras pivotant.

10. Dispositif selon la revendication 9, dans lequel ladite tige (17) est reliée, de manière pivotante, à une platine directrice (18) reliée à l'extrémité libre du bras pivotant, avec faculté de pivotement, une tige directrice étant montée entre ladite platine directrice et un point fixe (22) dudit dispositif qui est proche de l'axe de pivotement dudit bras pivotant.

11. Dispositif selon l'une quelconque des revendications précédentes, dans lequel la position du panneau de sectionnement (13), par rapport au bras pivotant (9), peut être réglée au moyen d'un élément de réglage (37) interposé entre ledit panneau de sectionnement et ledit bras pivotant.

12. Dispositif selon la revendication 11, dans lequel le fond du réceptacle (25) est équipé d'une platine d'insertion (31) pourvue d'une face d'insertion saillante (32) à conicité accentuée, laquelle platine d'insertion comprend au moins deux régions courbes (33, 34), une première région courbe (33) étant rattachée à ladite face d'insertion, et une seconde région courbe (34) étant rattachée à une poulie du moyen convoyeur.

13. Dispositif selon la revendication 12, dans lequel la course de ladite première région courbe (33) correspond à la trajectoire de mouvement du panneau de sectionnement (13) lors d'un mouvement imprimé audit panneau de sectionnement par l'élément de réglage (37).

14. Dispositif selon l'une quelconque des revendications précédentes, dans lequel le moyen convoyeur (27) revêt la forme d'une unité convoyeuse autosupportée (52), montée dans le châssis de manière amovible, ladite unité convoyeuse étant équipée, par exemple, d'une courroie convoyeuse sans fin (55) qui est montée sur un cadre muni de poulies (54).
